# EUROPÄISCHE PATENTSCHRIFT

(11) **EP 2 149 190 B1**
(45) Veröffentlichungstag und Bekanntmachung des Hinweises auf die Patenterteilung: **07.10.2015**
(21) Anmeldenummer: 07725422.5
(22) Anmeldetag: 22.05.2007
(51) Int. Cl.: H02K 3/28, B66B 11/04, H02K 3/18, H02K 5/08, H02K 11/00, H02K 15/06, H02K 16/04

(54) **ELEKTROMOTORISCHER TEIL EINES AUFZUGANTRIEBS**
ELECTRIC MOTOR PART OF AN ELEVATOR DRIVE
PARTIE ÉLECTROMOTRICE D'UN ENTRAÎNEMENT D'ASCENSEUR

(43) Veröffentlichungstag der Anmeldung: 03.02.2010
(73) Patentinhaber: ThyssenKrupp Elevator AG, 45143 Essen (DE)
(72) Erfinder: MÖLLGAARD, Nis-Anton, 73614 Schorndorf (DE); RESAG, Uwe, 72631 Aichtal (DE); SCHULZE, Jochen, 72770 Reutlingen (DE); VOGLER, Eberhard, 73765 Neuhausen a.d.F. (DE); NÄGELE, Roland, 70597 Stuttgart (DE)
(74) Vertreter: m patent group
(86) Internationale Anmeldenummer: PCT/EP2007/004521
(87) Internationale Veröffentlichungsnummer: WO 2008/141662

(56) Entgegenhaltungen:
- EP-A- 1 677 404
- WO-A-2007/036284
- DE-A1- 19 961 760
- JP-A- 10 304 641
- JP-A- 11 266 574
- JP-A- 2000 201 462
- JP-A- 2006 089 225
- US-A- 2 845 694
- US-A1- 2004 021 437

## Beschreibung

Die Erfindung betrifft einen elektromotorischen Teil eines Aufzugantriebs. Die Erfindung betrifft weiterhin ein Verfahren zum Einziehen von Spulen eines elektromotorischen Teils eines Aufzugantriebs.

In Aufzugantrieben werden üblicherweise Elektromotoren eingesetzt, die den elektromotorischen Teil des Aufzugantriebs bilden. Dieser elektromotorische Teil, der bspw. als Synchronmotor mit einem Rotor und einem Stator ausgebildet ist, ist regelmäßig an eine äußere Stromversorgung angeschlossen, wobei der Strom in Wicklungen des Rotors und/oder des Stators Magnetfelder erzeugt, die sich abstoßen oder anziehen und somit den Rotor in Rotation versetzen. Weiterhin ist es bekannt, im Rotor Permanentmagnete einzusetzen.

Bei elektromotorischen Teilen von Aufzugantrieben ist es aufgrund des zur Verfügung stehenden begrenzten Raumes insbesondere wichtig, Motoren mit geringem Platzbedarf und somit geringer Baugröße einzusetzen.

Aus der Druckschrift WO 99/43590 ist ein Aufzugsystem mit einem permanent erregten Motor bekannt. Der Aufzug wird dabei mit einem Seil betrieben, das mit dem Motor in Eingriff ist. Das Seil umfasst mindestens ein lasttragendes Element das in einer Umhüllung aus einem nichtmetallischen Material enthalten ist. Der Motor treibt das Seil an, das wiederum einen Fahrkorb im Aufzugschacht bewegt. Der Motor umfasst einen Rotor, der teilweise mit Permanentmagneten gebildet ist. Nachteilig bei dem eingesetzten Motor ist, dass dieser einen verhältnismäßig großen Raumbedarf hat.

Aus der Druckschrift WO 99/43589 ist ein Aufzugsystem mit einem Antriebsmotor bekannt, der zwischen dem Aufzugkorb und der Aufzugschachtseitenwand angeordnet ist. Dabei ist zusätzlich ein Gegengewicht vorgesehen, das ebenfalls im Aufzugschacht angeordnet ist. Der Antriebsmotor ist mit dem Aufzugkorb über zumindest ein flaches Seil verbunden. Auch dieser Motor erfordert viel Platz.

Die Druckschrift WO 02/103883 A1 beschreibt einen elektrischen Motor, der insbesondere für einen Aufzugantrieb vorgesehen ist. Dieser Motor weist einen Stator und einen Rotor auf, wobei der Stator und/oder der Rotor wenigstens ein als Gehäuse bzw. Körper dienendes Kunststoffteil aufweist, in das elektromagnetische und/oder permanentmagnetische Funktionselemente des Stators und/oder Rotors wenigstens teilweise eingeschlossen sind.

Aus der JP 2006-089225 ist ein elektromotorischer Teil eines Aufzugantriebs mit einem Rotor und einem Stator bekannt, wobei Wicklungen des Stators als Einzahnwicklung ausgebildet sind.

Aus der US 2004/0021437 A1 ist eine adaptive Architektur für Elektromotoren, Generatoren und andere elektrische Maschinen bekannt. Dieses Dokument beschreibt insbesondere eine Unterteilung eines Motors in eine Anzahl von Segmenten, wobei jedem Segment ein Umrichter zugeordnet sein kann.

Aus der JP 10304641 A ist ein Motor für einen Aufzugantrieb bekannt, welcher gehäuselos ausgebildet ist.

Die vorliegende Erfindung schlägt ein elektromotorischen Teil eines Aufzugantriebs mit den Merkmalen des Patentanspruchs 1 vor. Die spezielle Wicklung eines erfindungsgemäßen elektromotorischen Teils eines Aufzugantriebs baut sehr kompakt und weist gegenüber herkömmlichen Lösungen eine verringerten Schaltungsaufwand auf. Ein entsprechendes Verfahren zum Einziehen von Spulen ist Gegenstand des Patentanspruchs 5.

Der erfindungsgemäße elektromotorische Teil eines Aufzugantriebs umfasst einen Rotor und einen Stator, wobei Spulen des Stators und/oder des Rotors als Einzahnwicklungen ausgebildet sind. Diese Einzahnwicklung, bei der die einzelnen Spulen immer nur um einen Zahn herum gelegt sind, ermöglichen es, Motoren mit geringerem Platzbedarf und hohem Wirkungsgrad durch kleine Winkelköpfe herzustellen.

Die Einzahnwicklung, die auch als konzentrierte Wicklung bezeichnet wird, ist als Zweischicht-wicklung ausgebildet. Die Zweischichtwicklung, bei der in jeder Nut zwei Spulen vorgesehen sind, ist hinsichtlich des erzielten Rastmoments vorteilhaft. Des weiteren wird der Wirkungsgrad erhöht.

Die Spulen sind in Ausgestaltung wenigstens teilweise, insbesondere vollständig eingegossen, wobei regelmäßig eine Kunststoffmasse zum Eingießen verwendet wird. Das Vergießen der Wicklungen hat den Vorteil, dass durch den Verguß tragende Funktionen übernommen werden. Durch die Fixierung der Spulen wird die Herstellung eines solchen Motors gegenüber herkömmlichen Motoren erheblich vereinfacht, da bspw. keine mechanische Vor- und/oder Nachbearbeitung von Bauteilen notwendig ist.

Der vorgesehene Verguss bringt zudem aufgrund der erzielten besseren Wärmeleitung und der erreichten gleichmäßigen Wärmeverteilung erhebliche thermische Vorteile mit sich.

Durch die Kombination aus Einzahnwicklung und Vergießen der Wicklung ergibt sich eine besondere Erhöhung der Leistungdichte aufgrund des durch die Einzahnwicklung bedingten hohen Wirkungsgrads und der besseren Wärmeabfuhr durch den Wicklungsverguss. Als Masse für den Verguss kann bspw. ein Epoxymaterial mit verschiedenen Füllstoffen und Füllanteilen verwendet werden.

Der erfindungsgemäße elektromotorische Teil eines Aufzugantriebs kann mit und ohne Gehäuse ausgebildet sein. Im der gehäuselosen Ausführung liegt das Statorpaket frei. Die gehäuselose Ausführung bietet eine noch bessere Wärmeabfuhr an die Oberfläche und eine zusätzliche Kosteneinsparung.

Bei der Kühlung wird in selbstbelüftete, eigenbelüftete oder fremdbelüftete Kühlungen, bei denen ein Lüfter über einen separaten Motor angetrieben wird, unterschieden.

Die Erfindung bietet sich insbesondere bei permanent erregten Synchronmotoren an, bei denen bspw. die elektromagnetischen Funktionselemente des Rotors als Permanentmagnete ausgeführt sind. Weiterhin kann der Motor als "normaler" Motor mit zylindrischem Luftspalt oder als Scheibenläufer mit scheibenförmigem Luftspalt ausgebildet sein.

Bei dem Einsetzen der Spulen ist zu beachten, dass in eine Nut Spulen unterschiedlicher Phasen nur mit einem dazwischen gelegten Isolationsmaterial eingesetzt werden können, da die Isolation der Wicklungen an sich hierfür nicht ausreichend ist. Für diesen Zweck wird üblicherweise ein Isolationspapier verwendet.

Die besondere Anordnung der Spulen bei einer Zweischichtwicklung, bei der Wicklungen einzelner Phasen mit wechselnden Ober- und Unterlagen eingelegt sind, vereinfacht ein maschinelles Verfahren und ein automatisches Einziehen von Wicklungen. Ein Einbringen der Spulen , ohne dass diese mit Ausnahme des Sternpunkts verschaltet werden müssen, ist zudem möglich.

Das erfindungsgemäße Verfahren dient zum Einsetzen derSpulen, wobei Spulen jeder Phase nacheinander eingezogen werden. Dies ist insbesondere möglich, wenn Spulen einzelner Phasen mit wechselnder Ober- und Unterlage eingelegt bzw. eingebracht werden.

Die Ausführung der Einzahnwicklung als Zweischichtwicklung bewirkt durch Reduzierung der Verluste und Reduzierung der Drehmomentwelligkeit eine Erhöhung der Leistungsdichte. Die besondere Anordnung der Spulen ermöglicht das automatische Einbringen der Spulen ohne zeitintensiven Verschaltungsaufwand, da nur der Sternpunkt verschaltet werden muss.

Weiterhin sind Anschlussringe, die ein Paaren mit anderen Baugruppen ermöglichen (Baukastenprinzip) vorgesehen, die ein einfaches Vergießen ermöglichen, da keine Abdichtung und nur ein Stempel für verschiedene Baulängen zum Vergießen notwendig ist.

In Ausgestaltung ist ein modularer Aufbau, bei dem zweckmäßigerweise Ringe mit vergossen werden, vorgesehen. So ist der erfindungsgemäße elektromotorische Teil eines Aufzugantriebs problemlos austauschbar.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Schutzbereich der vorliegenden Erfindung zu verlassen, der durch die Ansprüche definiert ist.

Die Erfindung ist anhand von Ausführungsbeispielen in der Zeichnung schematisch dargestellt und wird im folgenden unter Bezugnahme auf die Zeichnung ausführlich beschrieben.
- Figur 1: zeigt einen Stator, der in einem erfindungsgemäßen elektromotorischen Teil eines Aufzugantriebs zum Einsatz kommt.
- Figur 2: zeigt eine mögliche Ausführungsform des erfindüngsgemäßen elektromotorischen Teils.

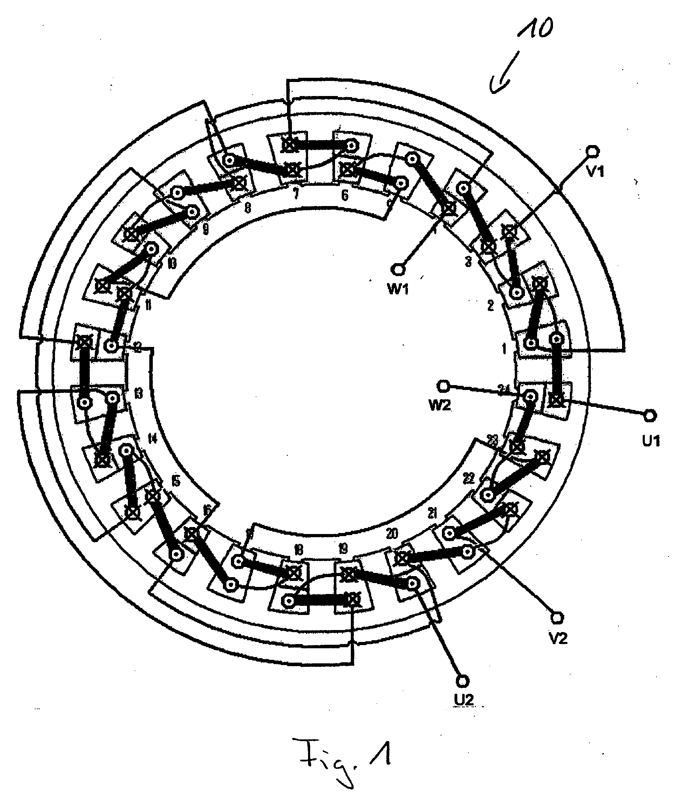

In Figur 1 ist ein Stator 10 mit drei Phasen U, V und W in Zweischichtwicklung dargestellt. Das Problem bei der Zweischichtwicklung besteht darin, dass die Aufteilung in üblicherweise zwei Einzüge wegen der Unter- und Oberschicht notwendig ist.

### Erster Einzug: Unterschicht (Nutgrund)

### Zweiter Einzug: Oberschicht (Richtung Luftspalt)

Zu beachten ist, dass nicht nur die Phasen miteinander verschaltet sein müssen, sondern auch die Spulen innerhalb der Phasen. Die Gesamtzahl der Verschaltungen bei einer 24-nutigen Zweischichtwicklung beläuft sich auf 21 Stück zzgl. des Sternpunkts. Dies verursacht einen erheblichen Zeitaufwand. Eine Herstellung zu einem angemessenen Preis scheint daher nicht möglich.

Zu beachten ist, dass die genannten Zahlen nur für die dargestellte Ausführung gelten. Es sind aber auch verschiedene andere Ausführungen mit unterschiedlichen Nutzahlen denkbar.

Es ist nunmehr vorgesehen, die Wicklungen nicht auf zweimal einzuziehen, sondern auf dreimal, nämlich jede Phase für sich. Somit wird die Wicklung nicht in Unter- und Oberschicht aufgeteilt, sondern in die drei Phasen U, V und W, wobei in der Darstellung die Phase U die erste Phase ist, die Phase V die zweite und die Phase W als dritte Phase eingezogen wird.

Somit entfällt der Verschaltungsaufwand der Spulen und Spulengruppen komplett. Lediglich der Sternpunkt ist noch zu verschalten. Daher ergibt sich eine Einsparung von 21 Verschaltungen, wodurch bei der Herstellung der damit einhergehende Zeitaufwand erheblich verringert werden kann.

Die Darstellung zeigt, wie die Spulen der Phasen als Zweischichtwicklungen mit wechselnder Ober- und Unterlage eingezogen sind. Dabei ist es möglich, die Phasen nacheinander einzuziehen. Außerdem ist zu beachten, dass zwischen Lagen unterschiedlicher Phasen ein Isolationsmaterial eingebracht werden muss.

Eine Spule der Phase U ist bspw. in Nut 24 und Nut 1 in Unterlage eingesetzt. Zwischen Nut 1 und Nut 2 erfolgt ein Wechsel zwischen Unter- und Oberlage. Bei der Phase V erfolgt bei der Wicklung von Nut 2 nach Nut 3 und bei der Wicklung von Nut 3 zu Nut 4 jeweils ein Wechsel zwischen Unter- und Oberlage. Diese besondere Art des Einziehens der Spulen der einzelnen Phasen ermöglicht ein einfaches maschinelles Einziehen der Spulen.

Weiterhin ist zu beachten, dass auch eine Flyer-Wickeltechnik eingesetzt werden kann.

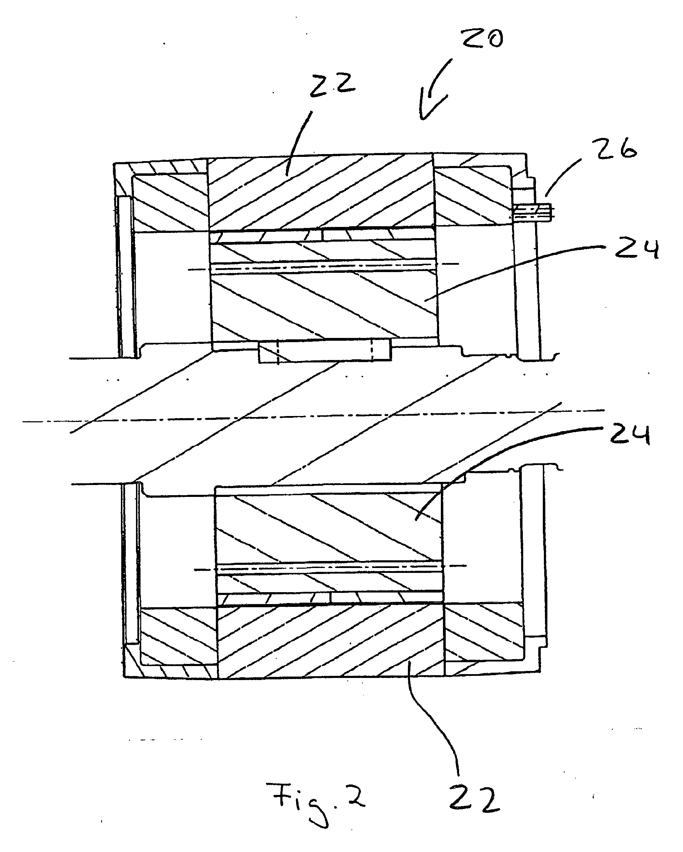

In Figur 2 ist eine Ausführungsform des elektromotorischen Teils eines Aufzugsantriebs, insgesamt mit der Bezugsziffer 20 bezeichnet, dargestellt. Dieser elektromotorische Teil 20 umfasst einen Stator 22 und einen Rotor 24 und ist als Innenläufer ausgebildet.

Weiterhin ist eine neutrale Schnittstelle vorgesehen, so dass der dargestellte elektromotorische Teil 20 einfach in beliebige Antriebe eingesetzt werden kann. Dabei können die Ausmaße des elektromotorischen Teils 20 gering sein. Dies ist insbesondere durch die eingesetzte Einzahnwicklungg erreicht. Die Zweischichtwicklung gewährleistet ein verbessertes Rastmoment. Somit ist der dargestellte elektromotorische Teil insbesondere zum Einsatz in einem Aufzugantrieb geeignet.

## Patentansprüche

1. Elektromotorischer Teil eines Aufzugantriebs, der als Innenläufer ausgebildet ist, mit einem Rotor (24) und einem Stator (10, 22), wobei Spulen des Stators als Einzahnwicklung ausgebildet sind, und wobei die Spulen zumindest teilweise eingegossen sind, und die Spulen als Zweischichtwicklungen ausgebildet sind, wobei die Spulen einzelner Phasen (U, V, W) mit wechselnden Ober- und Unterschichten eingebracht werden können, wobei
- die erste Phase eine erste Spule mit der ersten Seite in der Unterschicht einer ersten Nut (im Folgenden als n bezeichnet) und der zweiten Seite in der Unterschicht einer Nut n+1, und eine zweite Spule mit der ersten Seite in der Unterschicht einer Nut n+2 und der zweiten Seite in der Oberschicht von Nut n+1 aufweist;
- die zweite Phase eine erste Spule mit der ersten Seite in der Unterschicht einer Nut n+3 und der zweiten Seite in der Oberschicht von Nut n+2, und eine zweite Spule mit der ersten Seite in der Oberschicht von Nut n+3 und der zweiten Seite in der Unterschicht von einer Nut n+4 aufweist;
- und die dritte Phase eine erste Spule mit der ersten Seite in der Oberschicht von Nut n+4 und der zweiten Seite in der Unterschicht einer Nut n+5, und eine zweite Spule mit der ersten Seite in der Oberschicht einer Nut n+6 und der zweiten Seite in der Oberschicht von Nut n+5 aufweist.

2. Elektromotorischer Teil eines Aufzugantriebs nach Anspruch 1, der in eine Anzahl an Segmenten unterteilt ist, wobei jedem Segment ein Umrichter zugeordnet ist.

3. Elektromotorischer Teil eines Aufzugantriebs nach einem der Ansprüche 1 bis 2, der gehäuselos ausgebildet ist.

4. Elektromotorischer Teil eines Aufzugantriebs nach einem der Ansprüche 1 bis 3, der einen modularen Aufbau aufweist.

5. Verfahren zum Einziehen von Spulen eines Stators eines elektromotorischen Teils (20) eines Aufzugantriebs mit Zweischichtwicklungen, bei dem Spulen einzelner Phasen (U, V, W) mit wechselnden Ober- und Unterschichten eingebracht werden, wobei
- die erste Phase eine erste Spule mit der ersten Seite in der Unterschicht einer ersten Nut (im Folgenden als n bezeichnet) und der zweiten Seite in der Unterschicht einer Nut n+1, und eine zweite Spule mit der ersten Seite in der Unterschicht einer Nut n+2 und der zweiten Seite in der Oberschicht von Nut n+1 aufweist;
- die zweite Phase eine erste Spule mit der ersten Seite in der Unterschicht einer Nut n+3 und der zweiten Seite in der Oberschicht von Nut n+2, und eine zweite Spule mit der ersten Seite in der Oberschicht von Nut n+3 und der zweiten Seite in der Unterschicht von Nut n+4 aufweist;
- und die dritte Phase eine erste Spule mit der ersten Seite in der Oberschicht von Nut n+4 und der zweiten Seite in der Unterschicht einer Nut n+5, und eine zweite Spule mit der ersten Seite in der Oberschicht einer Nut n+6 und der zweiten Seite in der Oberschicht von Nut n+5 aufweist.

## Claims

1. Electric motor part of an elevator drive provided as an internal rotor, having a rotor (24) and a stator (10, 22), wherein coils of the stator are embodied as single-tooth windings, and wherein the coils are at least partly cast in place, and the coils are embodied as two-layer windings, while the coils of individual phases (U, V, W) with alternating upper and lower layers can be put in, wherein
- the first phase comprises a first coil with the first side in the lower layer of a first groove (hereinafter designated n) and the second side in the lower layer of a groove n+1, and a second coil with the first side in the lower layer of a groove n+2 and the second side in the upper layer of groove n+1;
- the second phase comprises a first coil with the first side in the lower layer of a groove n+3 and the second side in the upper layer of groove n+2, and a second coil with the first side in the upper layer of groove n+3 and the second side in the lower layer of a groove n+4;
- and the third phase comprises a first coil with the first side in the upper layer of groove n+4 and the second side in the lower layer of a groove n+5, and a second coil with the first side in the upper layer of a groove n+6 and the second side in the upper layer of groove n+5.

2. Electric motor part of an elevator drive according to claim 1 which is subdivided into a number of segments, each segment having an associated converter.

3. Electric motor part of an elevator drive according to one of claims 1 to 2, which is configured without a housing.

4. Electric motor part of an elevator drive according to one of claims 1 to 3 which has a modular construction.

5. Method of tightening coils of a stator of an electric motor part (20) of an elevator drive having two-layer windings, wherein coils of individual phases (U, V, W) with alternating upper and lower layers are put in, wherein
- the first phase comprises a first coil with the first side in the lower layer of a first groove (hereinafter designated n) and the second side in the lower layer of a groove n+1, and a second coil with the first side in the lower layer of a groove n+2 and the second side in the upper layer of groove n+1;
- the second phase comprises a first coil with the first side in the lower layer of a groove n+3 and the second side in the upper layer of groove n+2, and a second coil with the first side in the upper layer of groove n+3 and the second side in the lower layer of a groove n+4;
- and the third phase comprises a first coil with the first side in the upper layer of groove n+4 and the second side in the lower layer of a groove n+5, and a second coil with the first side in the upper layer of a groove n+6 and the second side in the upper layer of groove n+5.

## Revendications

1. Partie électromotrice d'un entraînement d'ascenseur qui est du type à rotor intérieur, ayant un rotor (24) et un stator (10, 22), des bobines du stator étant incorporées sous forme d'enroulements à une seule dent, et les bobines étant au moins partiellement moulées en place, et les bobines sont incorporées sous forme d'enroulements à deux couches, alors que les bobines de phases individuelles (U, V, W) ayant des couches supérieure et inférieure qui alternent peuvent être insérées, dans laquelle
- la première phase comporte une première bobine avec le premier côté dans la couche inférieure d'une première rainure (désignée ci-après n) et le second côté dans la couche inférieure d'une rainure n+1, et une seconde bobine avec le premier côté dans la couche inférieure d'une rainure n+2 et le second côté dans la couche supérieure d'une rainure n+1 ;
- la deuxième phase comporte une première bobine avec le premier côté dans la couche inférieure d'une rainure n+3 et le second côté dans la couche supérieure d'une rainure n+2, et une seconde bobine avec le premier côté dans la couche supérieure d'une rainure n+3 et le second côté dans la couche inférieure d'une rainure n+4 ;
- et la troisième phase comporte une première bobine avec le premier côté dans la couche supérieure d'une rainure n+4 et le second côté dans la couche inférieure d'une rainure n+5, et une seconde bobine avec le premier côté dans la couche supérieure d'une rainure n+6 et le second côté dans la couche supérieure d'une rainure n+5.

2. Partie électromotrice d'un entraînement d'ascenseur selon la revendication 1, laquelle est subdivisée en un certain nombre de segments, chaque segment ayant un convertisseur associé.

3. Partie électromotrice d'un entraînement d'ascenseur selon l'une des revendications 1 à 2, laquelle est configurée sans boîtier.

4. Partie électromotrice d'un entraînement d'ascenseur selon l'une des revendications 1 à 3 qui présente une structure modulaire.

5. Procédé de serrage de bobines d'un stator d'une partie électromotrice (20) d'un entraînement d'ascenseur ayant des enroulements à deux couches, dans lequel des bobines de phases individuelles (U, V, W) ayant des couches supérieure et inférieure qui alternent sont intégrées, dans lequel :
- la première phase comporte une première bobine avec le premier côté dans la couche inférieure d'une première rainure (désignée ci-après n) et le second côté dans la couche inférieure d'une rainure n+1, et une seconde bobine avec le premier côté dans la couche inférieure d'une rainure n+2 et le second côté dans la couche supérieure d'une rainure n+1 ;
- la deuxième phase comporte une première bobine avec le premier côté dans la couche inférieure d'une rainure n+3 et le second côté dans la couche supérieure d'une rainure n+2, et une seconde bobine avec le premier côté dans la couche supérieure d'une rainure n+3 et le second côté dans la couche inférieure d'une rainure n+4 ;
- et la troisième phase comporte une première bobine avec le premier côté dans la couche supérieure d'une rainure n+4 et le second côté dans la couche inférieure d'une rainure n+5, et une seconde bobine avec le premier côté dans la couche supérieure d'une rainure n+6 et le second côté dans la couche supérieure d'une rainure n+5.
